# EUROPEAN PATENT APPLICATION

(11) **EP 4 725 994 A1**
(43) Date of publication of application: **15.04.2026**
(21) Application number: 24843328.6
(22) Date of filing: 18.06.2024
(51) Int. Cl.: C09D 5/00, C09D 4/00, C09D 7/61, C08K 5/20, C08K 5/521, C08K 3/013, C09D 7/20, C08K 3/08

(54) **COATING COMPOSITION FOR PREVENTING SEMICONDUCTOR PATTERN COLLAPSE, AND PATTERN COATED USING SAME**

(30) Priority: 17.07.2023 KR 20230092161
(71) Applicant: Ycchem Co., Ltd., Gyeongsangbuk-do 40046 (KR)
(72) Inventor: LEE, Su Jin, Daegu 42634 (KR); KIM, Gi Hong, Daegu 41808 (KR); NOH, Eun Su, Dalseong-gun Daegu 42919 (KR); LIM, Hyun Chan, Daegu 41848 (KR); LEE, Seung Hyun, Daegu 42747 (KR); LEE, Seung Hun, Dalseong-gun Daegu 42918 (KR)
(74) Representative: Ter Meer Steinmeister & Partner
(86) International application number: PCT/KR2024/008357
(87) International publication number: WO 2025/018607

(57) **Abstract**

The objective of the present invention is to provide a coating composition capable of preventing pattern collapse by causing the contact angle between a semiconductor device pattern and water to be close to 90°, and to provide a pattern coated with the coating composition, and the coating composition capable of preventing pattern collapse comprises: a coating material for preventing pattern collapse, comprising an amide compound represented by chemical formula (1) or a phosphorus compound represented by chemical formula (2); and an organic solvent.

## Description

### Technical Field

The present disclosure relates to a coating composition for preventing pattern collapse, the coating composition being usable in a pattern having a high aspect ratio (of 15 or more) in memory semiconductor manufacturing.

### Background Art

As devices become smaller and more densely integrated, there is a demand for implementing finer patterns in semiconductor processes. Furthermore, while research and development are in progress on methods such as developing exposure equipment or introducing additional processes to achieve pattern miniaturization for forming such finer patterns, there is a strong demand for developing process equipment or process technologies capable of increasing the integration density of semiconductor devices and realizing the formation of structures having finer nanometer-scale dimensions.

To increase the integration density of semiconductor devices and enable the formation of structures having finer nanometer-scale dimensions, patterns having a high aspect ratio (the ratio of the width of a pattern to its height) are being used. However, this often results in pattern collapse during cleaning processes.

When the aspect ratio of fine patterns formed on device substrates was low, the wet cleaning method using distilled water did not cause any problem. However, with the increasing aspect ratio, final cleaning simply using only distilled water caused fine patterns to collapse.

The force that causes a fine pattern formed on a substrate to collapse increases in proportion to the surface tension of a material used during the patterning process, as well as cleaning, with respect to the fine pattern and to the cosine θ (cosθ) value of the contact angle with respect thereto. Thus, alternative measures have been explored by applying the principle that the smaller the surface tension, the smaller the force. Methods that are, in practice, applied are as follows.

To address fine pattern collapse, semiconductor manufacturers have employed methods of reducing the surface tension acting on such patterns through the use of alcohols, such as isopropanol, or surfactants.

As recent semiconductor manufacturing processes have become finer, the width of patterns has decreased while their height has increased compared to conventional processes. Accordingly, the aspect ratio of patterns has rapidly increased, resulting in problems that cannot be addressed by the method described above. Therefore, a method for addressing this issue has become necessary.

As briefly mentioned above, the force causing fine pattern collapse may be affected by the following factors including: the surface tension (Γ) of a cleaning liquid, the aspect ratio depending on the height (H) of a pattern, the distance (D) between patterns, the width (W) of the pattern, and the contact angle between the pattern and the cleaning liquid.

In fine pattern manufacturing processes, the final step of a wet process involves spin-drying a wafer. The above theory emphasizes the use of a cleaning agent having low surface tension to weaken the force exerted as the cleaning liquid drains out during spin drying. However, because recently developed fine patterns exhibit an excessively high aspect ratio, obtaining a sufficient effect merely by reducing the surface tension to some extent has become impossible. It is impossible to reduce the surface tension to a value close to 0 J/m² except in the case of liquid helium. Among currently available materials, including surfactants, the lowest surface tension value achievable is about 15 J/m². Furthermore, numerous experiments have confirmed that using such cleaning liquids, having a surface tension value of 15 J/m² or more, as the final cleaning liquid cannot prevent fine pattern collapse.

In other words, preventing fine pattern collapse by controlling surface tension is no longer effective, which is problematic.

### [Documents of related art]

### [Patent Documents]

(Patent Document 1) 1. Korea Patent No. 10-1118437 B1
(Patent Document 2) 2. Korea Patent No. 10-1535200 B1
(Patent Document 3) 3. Korea Patent No. 10-1483484 B1
(Patent Document 4) 4. Korea Patent No. 10-1525152 B1

### Disclosure

### Technical Problem

The present disclosure aims to provide a coating composition capable of preventing pattern collapse, the coating composition for preventing pattern collapse being usable in manufacturing a memory semiconductor device having a high aspect ratio to allow the contact angle of water with respect to a pattern including at least one of polysilicon, silicon oxide, silicon nitride, titanium nitride, and tungsten to be close to 90°, and also aims to provide a patterned device coated with this coating composition.

### Technical Solution

Hence, a first preferred embodiment of the present disclosure provides a coating composition for preventing pattern collapse, the coating composition characterized by including at least one selected from an amide compound represented by Chemical Formula (1) below and a phosphorus compound represented by Chemical Formula (2), wherein a self-assembly monolayer (SAM) is formed on an interface of a pattern by mixing the coating composition with an organic solvent, allowing the contact angle of water with respect to the pattern to be in a range of 80° to 100°.

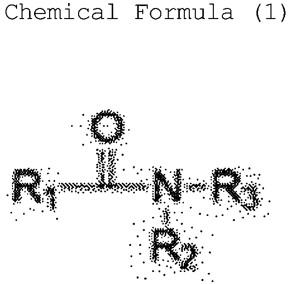

[Here, R1, R2, and R3 are each independently hydrogen, an alkyl group having 1 to 8 carbon atoms, a fluoroalkyl group having 1 to 8 carbon atoms, or a carbonyl group having 2 to 6 carbon atoms,
at least one of R1, R2, and R3 is each independently hydrogen or an alkyl group having 1 to 8 carbon atoms, and
at least one of R1, R2, and R3 is a fluoroalkyl group having 1 to 8 carbon atoms or a carbonyl group having 2 to 6 carbon atoms.]

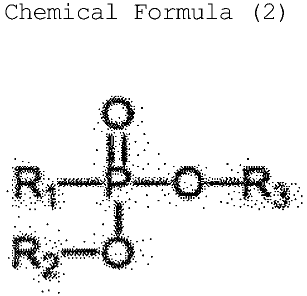

[Here, R1, R2, and R3 are each independently hydrogen, an alkyl group having 1 to 16 carbon atoms, a fluoroalkyl group having 1 to 10 carbon atoms, or a perfluoroalkyl group having 3 to 10 carbon atoms,
at least one of R1, R2, and R3 is hydrogen, and
at least one of R1, R2, and R3 is an alkyl group having 1 to 16 carbon atoms, a fluoroalkyl group having 1 to 10 carbon atoms, or a perfluoroalkyl group having 3 to 10 carbon atoms.]

The coating composition for preventing pattern collapse, according to the embodiment, may include: 5 to 30 wt% of the pattern coating material; and 70 to 95 wt% of the organic solvent.

The pattern coating material, according to the embodiment, may include at least one selected from: the amide compound represented by Chemical Formula (1); and the phosphorus compound represented by Chemical Formula (2).

The organic solvent, according to the embodiment, may be least one selected from a glycol compound having 4 to 20 carbon atoms, a glycol ether compound having 4 to 20 carbon atoms, an alkylene glycol alkyl ether compound having 4 to 20 carbon atoms, a silylamine compound having 3 to 12 carbon atoms, an alcohol having 1 to 10 carbon atoms, and a hydrocarbon solvent having 6 to 10 carbon atoms.

A second preferred embodiment of the present disclosure also provides a patterned device coated with the above coating composition for preventing pattern collapse.

The contact angle of water with respect to the patterned device coated with the coating composition for preventing pattern collapse, according to the embodiment, may be in a range of 80° to 100°.

### Advantageous Effects

A pattern coating composition, according to the present disclosure, enables uniform coating of a pattern on a substrate through a single-spin method or a batch-wet method, thereby preventing pattern collapse when drying the semiconductor substrate after oxide etching and final water cleaning. As a result, defects occurring in the step of a memory semiconductor device manufacturing process can be reduced, thereby not only increasing production through increased yield but also reducing manufacturing process costs and process time.

### Description of Drawings

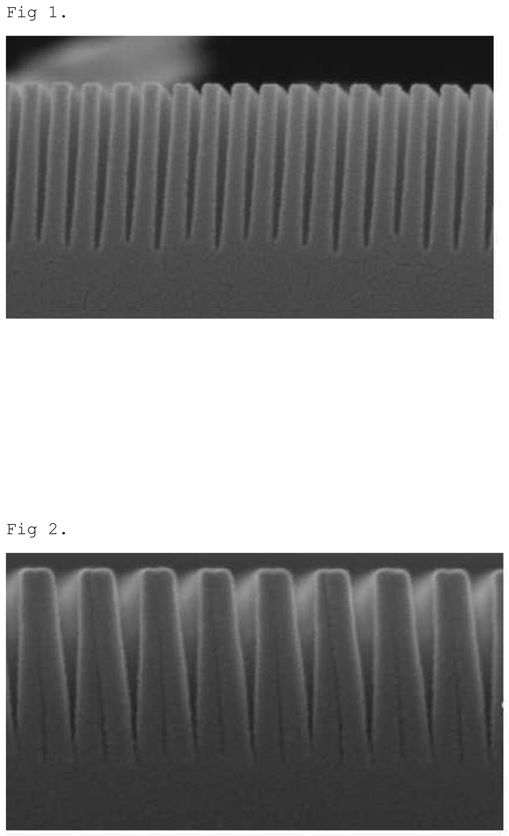

FIG. 1 shows the result of measuring the occurrence of pattern collapse according to Example 1.
FIG. 2 shows the result of measuring the occurrence of pattern collapse according to Comparative Example 1.

### Best Mode

Hereinafter, a coating composition for preventing pattern collapse, according to the present disclosure, will be described in more detail.

The present disclosure provides a coating composition for preventing pattern collapse, the coating composition characterized by including at least one selected from an amide compound represented by Chemical Formula (1) below and a phosphorus compound represented by Chemical Formula (2), wherein an SAM is formed on the interface of a pattern by mixing the coating composition with an organic solvent, allowing the contact angle of water with respect to the pattern to be in the range of 80° to 100°.

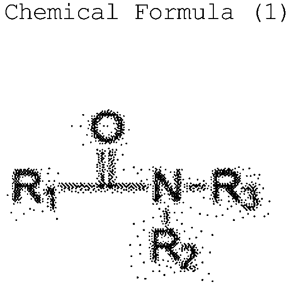

Here, R1, R2, and R3 are each independently hydrogen, an alkyl group having 1 to 8 carbon atoms, a fluoroalkyl group having 1 to 8 carbon atoms, or a carbonyl group having 2 to 6 carbon atoms,
at least one of R1, R2, and R3 is each independently hydrogen or an alkyl group having 1 to 8 carbon atoms, and
at least one of R1, R2, and R3 is a fluoroalkyl group having 1 to 8 carbon atoms or a carbonyl group having 2 to 6 carbon atoms.

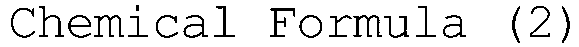

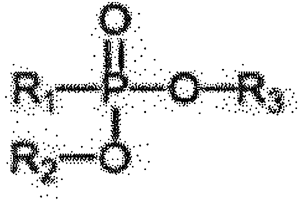

Here, R1, R2, and R3 are each independently hydrogen, an alkyl group having 1 to 16 carbon atoms, a fluoroalkyl group having 1 to 10 carbon atoms, or a perfluoroalkyl group having 3 to 10 carbon atoms,
at least one of R1, R2, and R3 is hydrogen, and
at least one of R1, R2, and R3 is an alkyl group having 1 to 16 carbon atoms, a fluoroalkyl group having 1 to 10 carbon atoms, or a perfluoroalkyl group having 3 to 10 carbon atoms.

The present disclosure relates to a pattern treatment material for preventing pattern collapse by coating a patterned surface so that the contact angle between water and the pattern is close to 90°, based on a theory that, among the factors of forces acting on patterns in memory semiconductor device manufacturing, more specifically, the factors of forces acting on cell-forming patterns, when the contact angle of a liquid becomes 90°, the cosθ value becomes 0, so the force acting on such patterns becomes 0, thus preventing pattern collapse. Specifically, the present disclosure relates to a coating composition for preventing pattern collapse by forming a hydrophobic SAM on the interface of a pattern.

When patterns formed on substrates and made of various materials depending on each device used in memory semiconductor manufacturing, such as polysilicon (Poly Si), silicon oxide (SiO), silicon nitride (SiN), titanium nitride (TiN), and tungsten (W), are coated with the coating composition for preventing pattern collapse, an SAM is formed by the compound represented by Chemical Formula (1), thereby rendering the interface hydrophobic. Furthermore, pattern collapse can be prevented by minimizing the force exerted as water drains out during the cleaning process after oxide layer etching.

Therefore, when applying the coating composition for preventing pattern collapse, according to the present disclosure, the contact angle of water with respect to the pattern is close to 90°, and the coating composition can readily spread between fine patterns of a 300 mm wafer, enabling uniform surface treatment. In addition, the coating composition is not only required to be miscible with solvents such as water or alcohol and to maintain sufficient adhesion to the pattern, but also characterized by being applicable by either batch or spin methods and completely removable by dry methods such as thermal, ultraviolet (UV), or plasma treatment after drying.

Considering the above conditions, the coating liquid of the present disclosure can form an SAM on the pattern to enable coating, and may include a coating material capable of adjusting the contact angle with water to be close to 90°. In addition, the coating liquid includes an organic solvent capable of dissolving or diluting the coating material.

Typically, pattern materials used in memory semiconductor device manufacturing, such as polysilicon, silicon oxide, silicon nitride, titanium nitride, and tungsten, are relatively hydrophilic inorganic substances. Accordingly, the contact angle with water is small during the cleaning process. For this reason, the capillary force generated causes pattern collapse. Thus, when the interface of the pattern becomes hydrophobic, the contact angle with water increases, thereby preventing pattern collapse.

Accordingly, the coating material, according to the present disclosure, has, in its molecular structure, a hydrophilic group as at least one functional group, including a hydroxyl group, an alkoxy group, an ester group, or an amide group, to enable chemical bonding with an inorganic interface, and has a hydrophobic group as at least one functional group, including an alkyl group, a fluoroalkyl group, or a mixture of an alkyl group and a perfluoroalkyl group, to increase the contact angle of water with respect thereto.

More specifically, the coating material for preventing pattern collapse may include at least one selected from the amide compound represented by Chemical Formula (1) and the phosphorus compound represented by Chemical Formula (2).

The amide compound represented by Chemical Formula (1) may be selected, for example, from the group consisting of acetamide, n-propylamide, n-butanamide, N,N-dimethylbutanamide, N,N-dimethylacetamide, 2,2,2-trifluoroacetamide, 2,2,2-trifluoro-N,N-bis(trifluoromethyl)acetamide, pentafluoropropanamide, 2,2,3,3,4,4,4-heptafluorobutanamide, 2,2,3,3,4,4,5,5,5-nonafluoropentanamide, diacetamide, N-propionylpropanamide, N-butyrylbutanamide, 2,2,2-trifluoro-N-(trifluoroacetyl)acetamide, 2,2,2-trifluoro-N-(2-hydroxyethyl) acetamide, or mixtures thereof.

The phosphorus compound represented by Chemical Formula (2) may be selected, for example, from the group consisting of monomethyl phosphate, monoethyl phosphate, propyl dihydrogen phosphate, butyl dihydrogen phosphate, monohexyl phosphate, monooctyl phosphate, decyl phosphate, dimethyl phosphate, diethyl phosphate, dibutyl phosphate, dihexyl phosphate, 3,3,3-trifluoropropyl dihydrogen phosphate, 3,3,4,4,5,5,6,6,6-nonafluorohexyl dihydrogen phosphate, perfluorooctyl phosphate, perfluorodecyl phosphate, bis(3,3,3-trifluoropropyl) hydrogen phosphate, bis(3,3,4,4,5,5,6,6,6-nonafluorohexyl) hydrogen phosphate, bis(perfluorooctyl) phosphate, bis(perfluorodecyl) phosphate, mono-n-dodecyl phosphate, tributyl phosphate, 11-phosphonoundecanoic acid, hexadecylphosphonic acid, octylphosphonic acid, tetradecylphosphonic acid, phosphate monoester having 8 to 18 carbon atoms, phosphate diester, or mixtures thereof.

The coating composition for preventing pattern collapse, according to the present disclosure, may include: 5 to 30 wt% of the pattern coating material; and 70 to 95 wt% of the organic solvent.

When the content of the coating material is less than 5 wt%, there is a problem of the pattern collapsing in the form of clusters due to uniformity issues in SAM formation on the interface of the pattern, and when the content of the coating material exceeds 30 wt%, a multilayer may be formed rather than a monolayer, or pattern collapse may occur because the hydrophobic groups are arranged randomly by vertical polymerization.

When coating materials such as polysilicon, silicon oxide, silicon nitride, titanium nitride, and tungsten with the coating composition for preventing pattern collapse, the force acting on the pattern vanishes in theory only when the contact angle of water with respect to the coated pattern becomes 90°. However, this theory is presumed to hold true only for a flat surface after complete coating and drying. In the actual cleaning process, it has been experimentally confirmed that, under a circumstance where different cleaning liquids are continuously supplied, coating materials exhibiting a contact angle in the range of about 80° to 100° on a flat surface are capable of preventing pattern collapse.

This is presumed to be due to a difference in contact angle between a flat surface and a patterned substrate, which results from the degree to which the pattern is coated with the pattern coating material, the treatment time, and mixing with water serving as the cleaning liquid after treatment.

When materials such as polysilicon, silicon oxide, silicon nitride, titanium nitride, and tungsten are subjected to surface treatment with the pattern coating composition, a contact angle of water on the surface in the range of about 80° to 100° is considered sufficient to prevent pattern collapse.

When the contact angle is smaller than 80° or larger than 100°, it is considered that as the cosθ value increases, the force acting on the pattern also increases, causing the pattern to collapse.

The pattern coating material may include the solvent, depending on the content of the composition. Some of the solvent is involved in coating and thus affects the contact angle of water with respect to the pattern. The content of the solvent may be in the range of 70 to 95 wt% based on 100 wt% of the coating composition for preventing pattern collapse. When the content of the solvent is less than 70 wt%, a problem with residues after the process using the coating composition for preventing pattern collapse arises, and when the content of the solvent exceeds 95 wt%, a large amount of the coating composition for preventing pattern collapse is used, which is problematic.

As mentioned above, the organic solvent that can be used may include a glycol compound having 4 to 20 carbon atoms, a glycol ether compound having 4 to 20 carbon atoms, an alkylene glycol alkyl ether compound having 4 to 20 carbon atoms, a silylamine compound having 3 to 12 carbon atoms, an alcohol having 1 to 10 carbon atoms, and a hydrocarbon solvent having 6 to 10 carbon atoms.

The solvent that can be used may be selected, for example, from the group consisting of tri(propylene glycol) methyl ether, tri(propylene glycol) monomethyl ether, diethylene glycol monobutyl ether, diethylene glycol monoisobutyl ether, diethylene glycol dibutyl ether, ethylene glycol, ethylene glycol acetate, ethylene glycol monobutyl ether, ethylene glycol monoethyl ether, ethylene glycol monomethyl ether, ethylene glycol dimethyl ether, diethylene glycol butyl ether, tripropylene glycol, propylene glycol, propylene glycol monomethyl ether acetate, petroleum ether, mineral spirits, ethyl 3-ethoxypropionate, ethyl 2-hydroxypropanoate, 3-methoxybutyl acetate, ethyl lactate, cyclohexanone, gamma-butyrolactone, methyl cellosolve acetate, butyl cellosolve, cyclopentanone, 2-ethoxyethanol acetate, isopropyl alcohol, decane, methanol, ethanol, butanol, benzyl alcohol, mesitylene, glycol, trimethylsilylamine, trimethylsilylmethylamine, N-trimethylsilyldimethylamine, bis(trimethylsilyl)amine, tris(trimethylsilyl)amine, trimethyl-N-(2-phenylethyl)silylamine, trimethyl-N-(1-phenyl-2-propyl)silylamine, N,N-diethyltrimethylsilylamine, or mixtures thereof.

By coating the pattern with the coating composition for preventing pattern collapse as described above, a pattern in which the contact angle of water with respect to the coated surface is in the range of 80° to 100° can be manufactured, thereby preventing pattern collapse.

Hereinafter, the present disclosure will be described in detail through examples. However, the following examples are disclosed only for illustrative purposes of the present disclosure, and the content of the present disclosure is not limited thereby.

### Mode for Invention

### [Examples and Comparative Examples]

### Example 1

Into a 1000 mL flask, 25 g of acetamide and 475 g of propylene glycol monomethyl ether acetate were introduced and stirred for 6 hours. Then, the resulting mixture was passed through a 0.01 µm filter to remove fine impurities, thereby preparing a coating composition for preventing pattern collapse.

### Examples 2 to 90

Coating compositions for preventing pattern collapse were prepared in the same manner as in Example 1, according to the compositions as shown in Tables 1 to 3.

### Comparative Examples 1 to 7

Coating compositions for preventing pattern collapse were prepared in the same manner as in Example 1, according to the compositions as shown in Tables 1 to 3.

The constituent components and the ratios thereof in Examples 1 to 90 and Comparative Examples 1 to 7 are shown in Tables 1 to 3 below.

**[Table 1]**

| | Coating material (g) | | | | Organic solvent (g) | | | |
|---|---|---|---|---|---|---|---|---|
| | Chemical Formula (1) | | Chemical Formula (2) | | Organic Solvent 1 | | Organic Solvent 2 | |
| | Name | Content (g) | Name | Content (g) | Name | Content (g) | Name | Content (g) |
| Example 1 | Acetamide | 25 | Monoethyl phosphate | 0 | Propylene glycol monomethyl ether acetate | 475 | Bis (tri methyls ilyl) am ine | 0 |
| Example 2 | Acetamide | 22.5 | Monoethyl phosphate | 2.5 | Propylene glycol monomethyl ether acetate | 450 | Bis (tri methyls ilyl) am ine | 25 |
| Example 3 | Acetamide | 20 | Monoethyl phosphate | 5 | Propylene glycol monomethyl ether acetate | 450 | Bis (tri methyls ilyl)am ine | 25 |
| Example 4 | Acetamide | 50 | Monoethyl phosphate | 0 | Propylene glycol monomethyl ether acetate | 450 | Bis (tri methyls ilyl)am ine | 0 |
| Example 5 | Acetamide | 45 | Monoethyl phosphate | 5 | Propylene glycol monomethyl ether acetate | 400 | Bis (tri methyls ilyl)am ine | 50 |
| Example 6 | Acetamide | 40 | Monoethyl phosphate | 10 | Propylene glycol monomethyl ether acetate | 400 | Bis (tri methyls ilyl)am ine | 50 |
| Example 7 | Acetamide | 75 | Monoethyl phosphate | 0 | Propylene glycol monomethyl ether acetate | 425 | Bis (tri methyls ilyl)am ine | 0 |
| Example 8 | Acetamide | 67.5 | Monoethyl phosphate | 7.5 | Propylene glycol monomethyl ether acetate | 400 | Bis (tri methyls ilyl)am ine | 25 |
| Example 9 | Acetamide | 60 | Monoethyl phosphate | 15 | Propylene glycol monomethyl ether acetate | 400 | Bis (tri methyls ilyl) am ine | 25 |
| Example 10 | Acetamide | 100 | Monoethyl phosphate | 0 | Propylene glycol monomethyl ether acetate | 400 | Bis (tri methyls ilyl) am ine | 0 |
| Example 11 | Acetamide | 90 | Monoethyl phosphate | 10 | Propylene glycol monomethyl ether acetate | 375 | Bis (tri methyls ilyl)am ine | 25 |
| Example 12 | Acetamide | 80 | Monoethyl phosphate | 20 | Propylene glycol monomethyl ether acetate | 375 | Bis (tri methyls ilyl)am ine | 25 |
| Example 13 | Acetamide | 125 | Monoethyl phosphate | 0 | Propylene glycol monomethyl ether acetate | 375 | Bis (tri methyls ilyl)am ine | 0 |
| Example 14 | Acetamide | 112.5 | Monoethyl phosphate | 12.5 | Propylene glycol monomethyl ether acetate | 350 | Bis (tri methyls ilyl)am ine | 25 |
| Example 15 | Acetamide | 100 | Monoethyl phosphate | 25 | Propylene glycol monomethyl ether acetate | 350 | Bis (tri methyls ilyl)am ine | 25 |
| Example 16 | Acetamide | 150 | Monoethyl phosphate | 0 | Propylene glycol monomethyl ether acetate | 350 | Bis (tri methyls ilyl)am ine | 0 |
| Example 17 | Acetamide | 135 | Monoethyl phosphate | 15 | Propylene glycol monomethyl ether acetate | 325 | Bis (tri methyls ilyl)am ine | 25 |
| Example 18 | Acetamide | 120 | Monoethyl phosphate | 30 | Propylene glycol monomethyl ether acetate | 325 | Bis (tri methyls ilyl) am ine | 25 |
| Example 19 | Acetamide | 22.5 | Mono-n-dodecyl phosphate | 2.5 | Propylene glycol monomethyl ether acetate | 450 | Bis (tri methyls ilyl)am ine | 25 |
| Example 20 | Acetamide | 20 | Mono-n-dodecyl phosphate | 5 | Propylene glycol monomethyl ether acetate | 450 | Bis (tri methyls ilyl)am ine | 25 |
| Example 21 | Acetamide | 45 | Mono-n-dodecyl phosphate | 5 | Propylene glycol monomethyl ether acetate | 400 | Bis (tri methyls ilyl)am ine | 50 |
| Example 22 | Acetamide | 40 | Mono-n-dodecyl phosphate | 10 | Propylene glycol monomethyl ether acetate | 400 | Bis (tri methyls ilyl)am ine | 50 |
| Example 23 | Acetamide | 67.5 | Mono-n-dodecyl phosphate | 7.5 | Propylene glycol monomethyl ether acetate | 400 | Bis (tri methyls ilyl)am ine | 25 |
| Example 24 | Acetamide | 60 | Mono-n-dodecyl phosphate | 15 | Propylene glycol monomethyl ether acetate | 400 | Bis (tri methyls ilyl)am ine | 25 |
| Example 25 | Acetamide | 90 | Mono-n-dodecyl phosphate | 10 | Propylene glycol monomethyl ether acetate | 375 | Bis (tri methyls ilyl)am ine | 25 |
| Example 26 | Acetamide | 80 | Mono-n-dodecyl phosphate | 20 | Propylene glycol monomethyl ether acetate | 375 | Bis (tri methyls ilyl) am ine | 25 |
| Example 27 | Acetamide | 112.5 | Mono-n-dodecyl phosphate | 12.5 | Propylene glycol monomethyl ether acetate | 350 | Bis (tri methyls ilyl)am ine | 25 |
| Example 28 | Acetamide | 100 | Mono-n-dodecyl phosphate | 25 | Propylene glycol monomethyl ether acetate | 350 | Bis (tri methyls ilyl)am ine | 25 |
| Example 29 | Acetamide | 135 | Mono-n-dodecyl phosphate | 15 | Propylene glycol monomethyl ether acetate | 325 | Bis (tri methyls ilyl)am ine | 25 |
| Example 30 | Acetamide | 120 | Mono-n-dodecyl phosphate | 30 | Propylene glycol monomethyl ether acetate | 325 | Bis (tri methyls ilyl)am ine | 25 |
| Comparative Example 1 | | | | | | | Bis (tri methyls ilyl)am ine | |
| Comparative Example 2 | Acetamide | 20 | Monoethyl phosphate | 0 | Propylene glycol monomethyl ether acetate | 480 | Bis (tri methyls ilyl)am ine | 0 |
| Comparative Example 3 | Acetamide | 200 | Monoethyl phosphate | 0 | Propylene glycol monomethyl ether acetate | 300 | Bis (tri methyls ilyl)am ine | 0 |

**[Table 2]**

| | Coating material (g) | | | | Organic solvent (g) | | | |
|---|---|---|---|---|---|---|---|---|
| | Chemical Formula (1) | | Chemical Formula (2) | | Organic Solvent 1 | | Organic Solvent 2 | |
| | Name | Content (g) | Name | Content (g) | Name | Content (g) | Name | Content (g) |
| Example 31 | Butanamid e | 25 | Monoethyl phosphate | 0 | Propylene glycol monomethyl ether acetate | 475 | Bis(tri methyls ilyl)am ine | 0 |
| Example 32 | Butanamid e | 22.5 | Monoethyl phosphate | 2.5 | Propylene glycol monomethyl ether acetate | 450 | Bis(tri methyls ilyl)am ine | 25 |
| Example 33 | Butanamid e | 20 | Monoethyl phosphate | 5 | Propylene glycol monomethyl ether acetate | 450 | Bis(tri methyls ilyl)am ine | 25 |
| Example 34 | Butanamid e | 50 | Monoethyl phosphate | 0 | Propylene glycol monomethyl ether acetate | 450 | Bis(tri methyls ilyl)am ine | 0 |
| Example 35 | Butanamid e | 45 | Monoethyl phosphate | 5 | Propylene glycol monomethyl ether acetate | 400 | Bis(tri methyls ilyl)am ine | 50 |
| Example 36 | Butanamid e | 40 | Monoethyl phosphate | 10 | Propylene glycol monomethyl ether acetate | 400 | Bis(tri methyls ilyl)am ine | 50 |
| Example 37 | Butanamid e | 75 | Monoethyl phosphate | 0 | Propylene glycol monomethyl ether acetate | 425 | Bis(tri methyls ilyl)am ine | 0 |
| Example 38 | Butanamid e | 67.5 | Monoethyl phosphate | 7.5 | Propylene glycol monomethyl ether acetate | 400 | Bis(tri methyls ilyl)am ine | 25 |
| Example 39 | Butanamid e | 60 | Monoethyl phosphate | 15 | Propylene glycol monomethyl ether acetate | 400 | Bis(tri methyls ilyl)am ine | 25 |
| Example 40 | Butanamid e | 100 | Monoethyl phosphate | 0 | Propylene glycol monomethyl ether acetate | 400 | Bis(tri methyls ilyl)am ine | 0 |
| Example 41 | Butanamid e | 90 | Monoethyl phosphate | 10 | Propylene glycol monomethyl ether acetate | 375 | Bis(tri methyls ilyl)am ine | 25 |
| Example 42 | Butanamid e | 80 | Monoethyl phosphate | 20 | Propylene glycol monomethyl ether acetate | 375 | Bis(tri methyls ilyl)am ine | 25 |
| Example 43 | Butanamid e | 125 | Monoethyl phosphate | 0 | Propylene glycol monomethyl ether acetate | 375 | Bis(tri methyls ilyl)am ine | 0 |
| Example 44 | Butanamid e | 112.5 | Monoethyl phosphate | 12.5 | Propylene glycol monomethyl ether acetate | 350 | Bis (tri methyls ilyl)am ine | 25 |
| Example 45 | Butanamid e | 100 | Monoethyl phosphate | 25 | Propylene glycol monomethyl ether acetate | 350 | Bis(tri methyls ilyl)am ine | 25 |
| Example 46 | Butanamid e | 150 | Monoethyl phosphate | 0 | Propylene glycol monomethyl ether acetate | 350 | Bis(tri methyls ilyl) am ine | 0 |
| Example 47 | Butanamid e | 135 | Monoethyl phosphate | 15 | Propylene glycol monomethyl ether acetate | 325 | Bis(tri methyls ilyl)am ine | 25 |
| Example 48 | Butanamid e | 120 | Monoethyl phosphate | 30 | Propylene glycol monomethyl ether acetate | 325 | Bis(tri methyls ilyl)am ine | 25 |
| Example 49 | Butanamid e | 22.5 | Mono-n-dodecyl phosphate | 2.5 | Propylene glycol monomethyl ether acetate | 450 | Bis(tri methyls ilyl)am ine | 25 |
| Example 50 | Butanamid e | 20 | Mono-n-dodecyl phosphate | 5 | Propylene glycol monomethyl ether acetate | 450 | Bis(tri methyls ilyl)am ine | 25 |
| Example 51 | Butanamid e | 45 | Mono-n-dodecyl phosphate | 5 | Propylene glycol monomethyl ether acetate | 400 | Bis(tri methyls ilyl)am ine | 50 |
| Example 52 | Butanamid e | 40 | Mono-n-dodecyl phosphate | 10 | Propylene glycol monomethyl ether acetate | 400 | Bis(tri methyls ilyl)am ine | 50 |
| Example 53 | Butanamid e | 67.5 | Mono-n-dodecyl phosphate | 7.5 | Propylene glycol monomethyl ether acetate | 400 | Bis(tri methyls ilyl)am ine | 25 |
| Example 54 | Butanamid e | 60 | Mono-n-dodecyl phosphate | 15 | Propylene glycol monomethyl ether acetate | 400 | Bis(tri methyls ilyl)am ine | 25 |
| Example 55 | Butanamid e | 90 | Mono-n-dodecyl phosphate | 10 | Propylene glycol monomethyl ether acetate | 375 | Bis(tri methyls ilyl) am ine | 25 |
| Example 56 | Butanamid e | 80 | Mono-n-dodecyl phosphate | 20 | Propylene glycol monomethyl ether acetate | 375 | Bis (tri methyls ilyl)am ine | 25 |
| Example 57 | Butanamid e | 112.5 | Mono-n-dodecyl phosphate | 12.5 | Propylene glycol monomethyl ether acetate | 350 | Bis (tri methyls ilyl)am ine | 25 |
| Example 58 | Butanamid e | 100 | Mono-n-dodecyl phosphate | 25 | Propylene glycol monomethyl ether acetate | 350 | Bis (tri methyls ilyl)am ine | 25 |
| Example 59 | Butanamid e | 135 | Mono-n-dodecyl phosphate | 15 | Propylene glycol monomethyl ether acetate | 325 | Bis (tri methyls ilyl)am ine | 25 |
| Example 60 | Butanamid e | 120 | Mono-n-dodecyl phosphate | 30 | Propylene glycol monomethyl ether acetate | 325 | Bis (tri methyls ilyl)am ine | 25 |
| Comparative Example 4 | Butanamid e | 20 | Monoethyl phosphate | 0 | Propylene glycol monomethyl ether acetate | 480 | Bis (tri methyls ilyl)am ine | 0 |
| Comparative Example 5 | Butanamid e | 200 | Monoethyl phosphate | 0 | Propylene glycol monomethyl ether acetate | 300 | Bis (tri methyls ilyl)am ine | 0 |

**[Table 3]**

| | Coating material (g) | | | | Organic solvent (g) | | | |
|---|---|---|---|---|---|---|---|---|
| | Chemical Formula (1) | | Chemical Formula (2) | | Organic Solvent 1 | | Organic Solvent 2 | |
| | Name | Content (g) | Name | Content (g) | Name | Content (g) | Name | Content (g) |
| Example 61 | Pentafluo ropropana mide | 25 | Monoethyl phosphate | 0 | Propylene glycol monomethyl ether acetate | 475 | Bis (tri methyls ilyl)am ine | 0 |
| Example 62 | Pentafluo ropropana mide | 22.5 | Monoethyl phosphate | 2.5 | Propylene glycol monomethyl ether acetate | 450 | Bis (tri methyls ilyl)am ine | 25 |
| Example 63 | Pentafluo ropropana mide | 20 | Monoethyl phosphate | 5 | Propylene glycol monomethyl ether acetate | 450 | Bis (tri methyls ilyl)am ine | 25 |
| Example 64 | Pentafluo ropropana mide | 50 | Monoethyl phosphate | 0 | Propylene glycol monomethyl ether acetate | 450 | Bis (tri methyls ilyl)am ine | 0 |
| Example 65 | Pentafluo ropropana mide | 45 | Monoethyl phosphate | 5 | Propylene glycol monomethyl ether acetate | 400 | Bis (tri methyls ilyl)am ine | 50 |
| Example 66 | Pentafluo ropropana mide | 40 | Monoethyl phosphate | 10 | Propylene glycol monomethyl ether acetate | 400 | Bis (tri methyls ilyl)am ine | 50 |
| Example 67 | Pentafluo ropropana mide | 75 | Monoethyl phosphate | 0 | Propylene glycol monomethyl ether acetate | 425 | Bis (tri methyls ilyl) am ine | 0 |
| Example 68 | Pentafluo ropropana mide | 67.5 | Monoethyl phosphate | 7.5 | Propylene glycol monomethyl ether acetate | 400 | Bis (tri methyls ilyl) am ine | 25 |
| Example 69 | Pentafluo ropropana mide | 60 | Monoethyl phosphate | 15 | Propylene glycol monomethyl ether acetate | 400 | Bis (tri methyls ilyl)am ine | 25 |
| Example 70 | Pentafluo ropropana mide | 100 | Monoethyl phosphate | 0 | Propylene glycol monomethyl ether acetate | 400 | Bis (tri methyls ilyl)am ine | 0 |
| Example 71 | Pentafluo ropropana mide | 90 | Monoethyl phosphate | 10 | Propylene glycol monomethyl ether acetate | 375 | Bis (tri methyls ilyl)am ine | 25 |
| Example 72 | Pentafluo ropropana mide | 80 | Monoethyl phosphate | 20 | Propylene glycol monomethyl ether acetate | 375 | Bis (tri methyls ilyl)am ine | 25 |
| Example 73 | Pentafluo ropropana mide | 125 | Monoethyl phosphate | 0 | Propylene glycol monomethyl ether acetate | 375 | Bis (tri methyls ilyl)am ine | 0 |
| Example 74 | Pentafluo ropropana mide | 112.5 | Monoethyl phosphate | 12.5 | Propylene glycol monomethyl ether acetate | 350 | Bis (tri methyls ilyl)am ine | 25 |
| Example 75 | Pentafluo ropropana mide | 100 | Monoethyl phosphate | 25 | Propylene glycol monomethyl ether acetate | 350 | Bis (tri methyls ilyl)am ine | 25 |
| Example 76 | Pentafluo ropropana mide | 150 | Monoethyl phosphate | 0 | Propylene glycol monomethyl ether acetate | 350 | Bis (tri methyls ilyl) am ine | 0 |
| Example 77 | Pentafluo ropropana mide | 135 | Monoethyl phosphate | 15 | Propylene glycol monomethyl ether acetate | 325 | Bis (tri methyls ilyl)am ine | 25 |
| Example 78 | Pentafluo ropropana mide | 120 | Monoethyl phosphate | 30 | Propylene glycol monomethyl ether acetate | 325 | Bis (tri methyls ilyl)am ine | 25 |
| Example 79 | Pentafluo ropropana mide | 22.5 | Mono-n-dodecyl phosphate | 2.5 | Propylene glycol monomethyl ether acetate | 450 | Bis (tri methyls ilyl)am ine | 25 |
| Example 80 | Pentafluo ropropana mide | 20 | Mono-n-dodecyl phosphate | 5 | Propylene glycol monomethyl ether acetate | 450 | Bis (tri methyls ilyl)am ine | 25 |
| Example 81 | Pentafluo ropropana mide | 45 | Mono-n-dodecyl phosphate | 5 | Propylene glycol monomethyl ether acetate | 400 | Bis (tri methyls ilyl)am ine | 50 |
| Example 82 | Pentafluo ropropana mide | 40 | Mono-n-dodecyl phosphate | 10 | Propylene glycol monomethyl ether acetate | 400 | Bis (tri methyls ilyl)am ine | 50 |
| Example 83 | Pentafluo ropropana mide | 67.5 | Mono-n-dodecyl phosphate | 7.5 | Propylene glycol monomethyl ether acetate | 400 | Bis (tri methyls ilyl)am ine | 25 |
| Example 84 | Pentafluo ropropana mide | 60 | Mono-n-dodecyl phosphate | 15 | Propylene glycol monomethyl ether acetate | 400 | Bis (tri methyls ilyl) am ine | 25 |
| Example 85 | Pentafluo ropropana mide | 90 | Mono-n-dodecyl phosphate | 10 | Propylene glycol monomethyl ether acetate | 375 | Bis (tri methyls ilyl) am ine | 25 |
| Example 86 | Pentafluo ropropana mide | 80 | Mono-n-dodecyl phosphate | 20 | Propylene glycol monomethyl ether acetate | 375 | Bis (tri methyls ilyl)am ine | 25 |
| Example 87 | Pentafluo ropropana mide | 112.5 | Mono-n-dodecyl phosphate | 12.5 | Propylene glycol monomethyl ether acetate | 350 | Bis (tri methyls ilyl)am ine | 25 |
| Example 88 | Pentafluo ropropana mide | 100 | Mono-n-dodecyl phosphate | 25 | Propylene glycol monomethyl ether acetate | 350 | Bis (tri methyls ilyl)am ine | 25 |
| Example 89 | Pentafluo ropropana mide | 135 | Mono-n-dodecyl phosphate | 15 | Propylene glycol monomethyl ether acetate | 325 | Bis (tri methyls ilyl)am ine | 25 |
| Example 90 | Pentafluo ropropana mide | 120 | Mono-n-dodecyl phosphate | 30 | Propylene glycol monomethyl ether acetate | 325 | Bis (tri methyls ilyl)am ine | 25 |
| Comparative Example 6 | Pentafluo ropropana mide | 20 | Monoethyl phosphate | 0 | Propylene glycol monomethyl ether acetate | 480 | Bis (tri methyls ilyl)am ine | 0 |
| Comparative Example 7 | Pentafluo ropropana mide | 200 | Monoethyl phosphate | 0 | Propylene glycol monomethyl ether acetate | 300 | Bis (tri methyls ilyl) am ine | 0 |

### [Experimental Examples and Comparative Experimental Examples: Measurement of Contact Angle and Occurrence of Pattern Collapse]

### Experimental Examples 1 to 90

Using the coating compositions for preventing pattern collapse according to Examples 1 to 90, silicon substrates were coated, and the contact angles of water with respect to the coated patterns were then measured.

A patterned wafer formed through the following treatment process was processed through a spin method to observe the occurrence of pattern collapse.

A pattern treatment process involved rotating a semiconductor wafer at a speed in the range of 0 to 1000 rpm while spraying at a rate in the range of 1 to 30 mL/s for at least one second. The patterned oxide layer was removed through primary treatment using an etching solution such as hydrofluoric acid. The wafer with the oxide layer removed was subjected to continuous treatment sequentially with deionized water (DI water) and alcohol, and then coated with the coating composition for preventing pattern collapse prepared above. Lastly, the wafer was cleaned with water and alcohol, and then dried through a spin dry method to obtain a treated wafer. The measurement results of such wafers obtained using a scanning electron microscope (SEM, Hitachi S-4700 series) showed that patterns with all oxide layers removed could be formed without pattern collapse.

### Comparative Experimental Examples 1 to 7

Comparative Experimental Example 1 was performed in the same manner as the experimental examples, except that the coating process with the coating composition for preventing pattern collapse, prepared above, was not performed. In other words, the pattern cleaning process involved removing the patterned oxide layer by subjecting a semiconductor substrate on which the oxide layer was formed to primary treatment using an etching solution such as hydrofluoric acid. Then, the silicon substrate was cleaned with water without performing separate coating and dried through a spin method to obtain a treated substrate. The measurement result of the substrate obtained using an SEM (Hitachi S-4700 series) confirmed that the patterned oxide layer was removed, but the pattern collapsed.

In Comparative Experimental Examples 2 to 7, after preparing the coating compositions for preventing pattern collapse in the same manner as in Example 1, according to the constituent components and the ratios thereof as shown in Tables 1 to 3, and coating silicon substrates with the coating compositions prepared, the contact angles of water with respect to the coated patterns were measured. Additionally, the patterned wafers were processed in the same manner as in Experimental Example 1 to observe the occurrence of pattern collapse. The results thereof confirmed that all patterns collapsed.

The measurement results of Experimental Examples 1 to 90 and Comparative Experimental Examples 1 to 7 are shown in Table 4 below.

**[Table 4]**

| | Contact angle (°) | Occurrence of pattern collapse (X: collapsed, O: not collapsed) |
|---|---|---|
| Experimental Example 1 | 80 | O |
| Experimental Example 2 | 82 | O |
| Experimental Example 3 | 82 | O |
| Experimental Example 4 | 82 | O |
| Experimental Example 5 | 84 | O |
| Experimental Example 6 | 84 | O |
| Experimental Example 7 | 83 | O |
| Experimental Example 8 | 85 | O |
| Experimental Example 9 | 85 | O |
| Experimental Example 10 | 83 | O |
| Experimental Example 11 | 85 | O |
| Experimental Example 12 | 85 | O |
| Experimental Example 13 | 83 | O |
| Experimental Example 14 | 85 | O |
| Experimental Example 15 | 85 | O |
| Experimental Example 16 | 81 | O |
| Experimental Example 17 | 82 | O |
| Experimental Example 18 | 82 | O |
| Experimental Example 19 | 83 | O |
| Experimental Example 20 | 83 | O |
| Experimental Example 21 | 85 | O |
| Experimental Example 22 | 85 | O |
| Experimental Example 23 | 86 | O |
| Experimental Example 24 | 86 | O |
| Experimental Example 25 | 87 | O |
| Experimental Example 26 | 87 | O |
| Experimental Example 27 | 87 | O |
| Experimental Example 28 | 87 | O |
| Experimental Example 29 | 83 | O |
| Experimental Example 30 | 83 | O |
| Experimental Example 31 | 82 | O |
| Experimental Example 32 | 84 | O |
| Experimental Example 33 | 84 | O |
| Experimental Example 34 | 84 | O |
| Experimental Example 35 | 86 | O |
| Experimental Example 36 | 86 | O |
| Experimental Example 37 | 85 | O |
| Experimental Example 38 | 87 | O |
| Experimental Example 39 | 87 | O |
| Experimental Example 40 | 85 | O |
| Experimental Example 41 | 88 | O |
| Experimental Example 42 | 88 | O |
| Experimental Example 43 | 85 | O |
| Experimental Example 44 | 88 | O |
| Experimental Example 45 | 88 | O |
| Experimental Example 46 | 82 | O |
| Experimental Example 47 | 83 | O |
| Experimental Example 48 | 83 | O |
| Experimental Example 49 | 85 | O |
| Experimental Example 50 | 85 | O |
| Experimental Example 51 | 87 | O |
| Experimental Example 52 | 87 | O |
| Experimental Example 53 | 89 | O |
| Experimental Example 54 | 89 | O |
| Experimental Example 55 | 90 | O |
| Experimental Example 56 | 90 | O |
| Experimental Example 57 | 90 | O |
| Experimental Example 58 | 90 | O |
| Experimental Example 59 | 85 | O |
| Experimental Example 60 | 85 | O |
| Experimental Example 61 | 85 | O |
| Experimental Example 62 | 89 | O |
| Experimental Example 63 | 89 | O |
| Experimental Example 64 | 87 | O |
| Experimental Example 65 | 92 | O |
| Experimental Example 66 | 92 | O |
| Experimental Example 67 | 89 | O |
| Experimental Example 68 | 94 | O |
| Experimental Example 69 | 94 | O |
| Experimental Example 70 | 90 | O |
| Experimental Example 71 | 95 | O |
| Experimental Example 72 | 95 | O |
| Experimental Example 73 | 90 | O |
| Experimental Example 74 | 95 | O |
| Experimental Example 75 | 95 | O |
| Experimental Example 76 | 86 | O |
| Experimental Example 77 | 88 | O |
| Experimental Example 78 | 88 | O |
| Experimental Example 79 | 93 | O |
| Experimental Example 80 | 93 | O |
| Experimental Example 81 | 97 | O |
| Experimental Example 82 | 97 | O |
| Experimental Example 83 | 99 | O |
| Experimental Example 84 | 99 | O |
| Experimental Example 85 | 99 | O |
| Experimental Example 86 | 99 | O |
| Experimental Example 87 | 98 | O |
| Experimental Example 88 | 98 | O |
| Experimental Example 89 | 93 | O |
| Experimental Example 90 | 93 | O |
| Comparative Experimental Example 1 | 22 | X |
| Comparative Experimental Example 2 | 68 | X |
| Comparative Experimental Example 3 | 73 | X |
| Comparative Experimental Example 4 | 70 | X |
| Comparative Experimental Example 5 | 75 | X |
| Comparative Experimental Example 6 | 75 | X |
| Comparative Experimental Example 7 | 79 | X |

Although certain aspects of the present disclosure have been described in detail hereinabove, it will be apparent to those skilled in the art to which the present disclosure pertains that these specific descriptions are only preferred embodiments, and the scope of the present disclosure is not limited thereby. Accordingly, the substantial scope of the present disclosure will be defined by the appended claims and their equivalents.

## Claims

1. A coating composition for preventing pattern collapse, the coating composition comprising:
a coating material for preventing pattern collapse, the coating material containing an amide compound represented by Chemical Formula (1) or a phosphorus compound represented by Chemical Formula (2); and
an organic solvent, 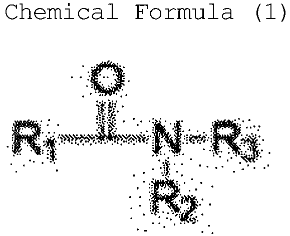
[wherein R1, R2, and R3 are each independently hydrogen, an alkyl group having 1 to 8 carbon atoms, a fluoroalkyl group having 1 to 8 carbon atoms, or a carbonyl group having 2 to 6 carbon atoms,
at least one of R1, R2, and R3 is each independently hydrogen or an alkyl group having 1 to 8 carbon atoms, and
at least one of R1, R2, and R3 is a fluoroalkyl group having 1 to 8 carbon atoms or a carbonyl group having 2 to 6 carbon atoms] 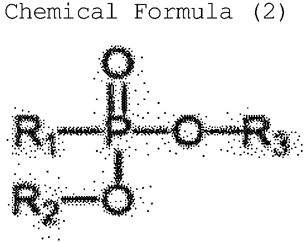
[wherein R1, R2, and R3 are each independently hydrogen, an alkyl group having 1 to 16 carbon atoms, a fluoroalkyl group having 1 to 10 carbon atoms, or a perfluoroalkyl group having 3 to 10 carbon atoms,
at least one of R1, R2, and R3 is hydrogen, and
at least one of R1, R2, and R3 is an alkyl group having 1 to 16 carbon atoms, a fluoroalkyl group having 1 to 10 carbon atoms, or a perfluoroalkyl group having 3 to 10 carbon atoms].

2. The coating composition of claim 1, wherein the coating composition comprises:
5 to 30 wt% of the coating material containing the amide compound represented by Chemical Formula (1) or the phosphorus compound represented by Chemical Formula (2); and
70 to 95 wt% of the organic solvent.

3. The coating composition of claim 2, wherein the amide compound represented by Chemical Formula (1) is a compound selected from the group consisting of acetamide, n-propylamide, n-butanamide, N,N-dimethylbutanamide, N,N-dimethylacetamide, 2,2,2-trifluoroacetamide, 2,2,2-trifluoro-N-N-bis(trifluoromethyl)acetamide, pentafluoropropanamide, 2,2,3,3,4,4,4-heptafluorobutanamide, 2,2,3,3,4,4,5,5,5-nonafluoropentanamide, diacetamide, N-propionylpropanamide, N-butyrylbutanamide, 2,2,2-trifluoro-N-(trifluoroacetyl)acetamide, and 2,2,2-trifluoro-N-(2-hydroxyethyl)acetamide, or a mixture of two or more thereof.

4. The coating composition of claim 2, wherein the phosphorus compound represented by Chemical Formula (2) is a compound selected from the group consisting of monomethyl phosphate, monoethyl phosphate, propyl dihydrogen phosphate, butyl dihydrogen phosphate, monohexyl phosphate, monooctyl phosphate, decyl phosphate, dimethyl phosphate, diethyl phosphate, dibutyl phosphate, dihexyl phosphate, 3,3,3-trifluoropropyl dihydrogen phosphate, 3,3,4,4,5,5,6,6,6-nonafluorohexyl dihydrogen phosphate, perfluorooctyl phosphate, perfluorodecyl phosphate, bis(3,3,3-trifluoropropyl) hydrogen phosphate, bis(3,3,4,4,5,5,6,6,6-nonafluorohexyl) hydrogen phosphate, bis(perfluorooctyl) phosphate, bis(perfluorodecyl) phosphate, mono-n-dodecyl phosphate, tributyl phosphate, 11-phosphonoundecanoic acid, hexadecylphosphonic acid, octylphosphonic acid, tetradecylphosphonic acid, phosphate monoester having 8 to 18 carbon atoms, and phosphate diester, or a mixture of two or more thereof.

5. The coating composition of claim 2, wherein the organic solvent is a compound selected from the group consisting of a glycol compound having 4 to 20 carbon atoms, a glycol ether compound having 4 to 20 carbon atoms, an alkylene glycol alkyl ether compound having 4 to 20 carbon atoms, a silylamine compound having 3 to 12 carbon atoms, an alcohol having 1 to 10 carbon atoms, and a hydrocarbon having 6 to 10 carbon atoms, or a mixture of two or more thereof.

6. A pattern coated with the coating composition of any one of claims 1 to 5.

7. The pattern of claim 6, wherein the pattern is made of a material comprising at least one of polysilicon, silicon oxide, silicon nitride, titanium nitride, and tungsten.
